# EUROPEAN PATENT APPLICATION

(11) **EP 4 804 131 A1**
(43) Date of publication of application: **09.09.2026**
(21) Application number: 24884559.6
(22) Date of filing: 24.10.2024
(51) Int. Cl.: G06T 11/60

(54) **MULTIMEDIA DATA GENERATION METHOD AND APPARATUS, STORAGE MEDIUM, AND ELECTRONIC DEVICE**

(30) Priority: 03.11.2023 CN 202311460420
(71) Applicant: BEIJING YOUZHUJU NETWORK TECHNOLOGY CO. LTD., Beijing 101299 (CN)
(72) Inventor: CHEN, Tian, Beijing 100028 (CN)
(74) Representative: Isarpatent
(86) International application number: PCT/CN2024/127024
(87) International publication number: WO 2025/092555

(57) **Abstract**

Embodiments of the present disclosure provide a multimedia data generation method and apparatus, a storage medium, and an electronic device. The method comprises: in response to a preset trigger operation, displaying an object selection page; in response to an object selection operation in the object selection page, displaying an information editing page, the information editing page comprising an image to be displayed and text to be displayed of a selected target object; and, in response to an editing operation on the image to be displayed and/or the text to be displayed in the information editing page, generating multimedia data of the target object.

## Description

### CROSS-REFERENCE TO RELATED APPLICATION(S)

The present application claims priority to Chinese Patent Application No. 202311460420.3, filed on November 3, 2023 and entitled "MULTIMEDIA DATA GENERATION METHOD AND APPARATUS, STORAGE MEDIUM, AND ELECTRONIC DEVICE", which is incorporated herein by reference in its entirety.

### FIELD

Embodiments of the present disclosure relate to computer technologies, and in particular to a multimedia data generation method and apparatus, a storage medium, and an electronic device.

### BACKGROUND

With the continuous development of network technology, more and more users display items through the Internet, specifically by uploading multimedia data of the displayed items to the Internet, enabling viewers to view the multimedia data through client applications.

Prior to the publication of the multimedia data, processes such as item selection, material integration, and multimedia data generation require the use of various tools or applications, resulting in high operational complexity.

### SUMMARY

The present disclosure provides a multimedia data generation method and apparatus, a storage medium, and an electronic device, to simplify a multimedia data generation process and reduce an operational difficulty.

According to a first aspect, an embodiment of the present disclosure provides a multimedia data generation method. The method includes:
displaying an object selection page in response to a preset trigger operation;
displaying an information editing page in response to an object selection operation in the object selection page, where the information editing page includes an image to be displayed and a text item to be displayed for a selected target object; and
generating multimedia data of the target object in response to an edit operation on the image to be displayed and/or the text item to be displayed in the information editing page.

According to a second aspect, an embodiment of the present disclosure further provides a multimedia data generation apparatus. The apparatus includes:
an object selection page display module configured to display an object selection page in response to a preset trigger operation;
an information editing page display module configured to display an information editing page in response to an object selection operation in the object selection page, where the information editing page includes an image to be displayed and a text item to be displayed for a selected target object; and
a multimedia data generation module configured to generate multimedia data of the target object in response to an edit operation on the image to be displayed and/or the text item to be displayed in the information editing page.

According to a third aspect, an embodiment of the present disclosure further provides an electronic device. The electronic device includes:
one or more processors; and
a storage means configured to store one or more programs, where
the one or more programs, when executed by the one or more processors, cause the one or more processors to implement the multimedia data generation method according to any embodiment of the present disclosure.

According to a fourth aspect, an embodiment of the present disclosure further provides a storage medium including computer-executable instructions, where the computer-executable instructions, when executed by a computer processor, are used to perform the multimedia data generation method according to any embodiment of the present disclosure.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a multimedia data generation method according to an embodiment of the present disclosure;
FIG. 2 is a schematic diagram of display of an object selection page according to an embodiment of the present disclosure;
FIG. 3 is a schematic diagram of display of an information editing page according to an embodiment of the present disclosure;
FIG. 4 is a schematic diagram of display of an information editing page according to an embodiment of the present disclosure;
FIG. 5 is a schematic diagram of a navigation page according to an embodiment of the present disclosure;
FIG. 6 is a schematic diagram of an object selection page according to an embodiment of the present disclosure;
FIG. 7 is a schematic diagram of a candidate object switching in an object selection page according to an embodiment of the present disclosure;
FIG. 8 is a schematic diagram of an information editing page according to an embodiment of the present disclosure;
FIG. 9 is a schematic diagram of display of an image preview page according to an embodiment of the present disclosure;
FIG. 10 is a schematic diagram of a display process of an information editing page according to an embodiment of the present disclosure;
FIG. 11 is a schematic diagram of an audio setting process according to an embodiment of the present disclosure;
FIG. 12 is a schematic structural diagram of a multimedia data generation apparatus according to an embodiment of the present disclosure; and
FIG. 13 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

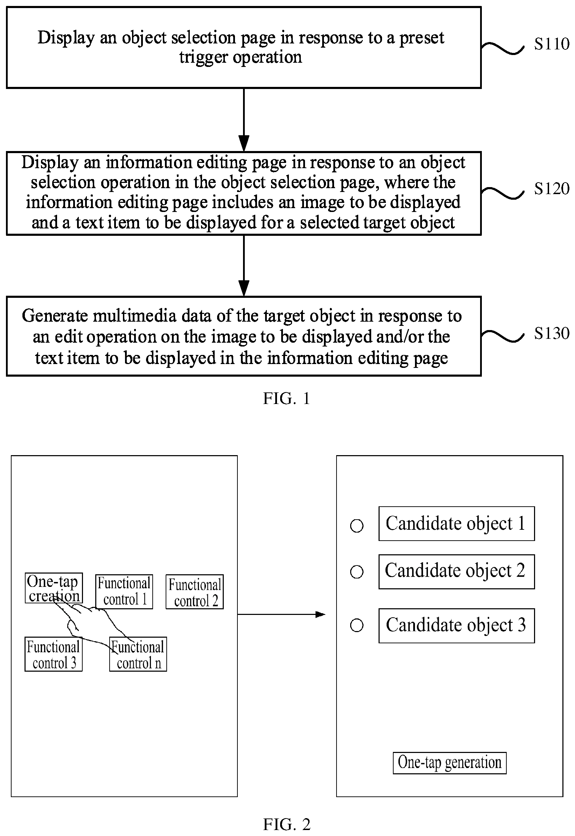

FIG. 1 is a schematic flowchart of a multimedia data generation method according to an embodiment of the present disclosure. This embodiment of the present disclosure is applicable to a scenario of rapidly generating multimedia data of a target object. The method may be performed by a multimedia data generation apparatus. The apparatus may be implemented in the form of software and/or hardware. Optionally, the apparatus may be implemented by an electronic device. The electronic device may be a mobile terminal, a PC, a server, etc.

As shown in FIG. 1, the method includes the following step.

S110: An object selection page is displayed in response to a preset trigger operation.

In this embodiment, the object selection page is a page that displays candidate objects and provides a selection function for the candidate objects, a plurality of candidate objects are displayed in the object selection page by displaying the object selection page, and a user can select a target object from the plurality of candidate objects in the object selection page. The candidate object herein may be an item, a service, etc., for example, the item includes, but is not limited to clothing, food, etc., and the service includes, but is not limited to fitness, hairdressing, etc. The type of candidate objects in the object selection page is not limited herein.

The preset trigger operation is an operation that triggers the object selection page, and may be a trigger operation on a specific control, a trigger operation on specific information, or a preset gesture operation.

In some embodiments, the specific control may be a multimedia data creation control, which is set in a navigation page. Accordingly, displaying the object selection page in response to the preset trigger operation includes: displaying a navigation page, where the navigation page includes a multimedia data creation control; and displaying the object selection page in response to a trigger operation on the multimedia data creation control.

The navigation page may be an application home page or an application personal page, where the application herein is an application with a multimedia data publishing function, and the application may also be used to play multimedia data. For example, the navigation page may be displayed by an initiating operation; the navigation page may be displayed by tapping on a navigation page tab such as "Home" or "Me"; or it may also switch to the navigation page by a switch operation on the navigation page tab.

The navigation page includes the multimedia data creation control that may be displayed in the form of a preset icon and/or a preset character. For example, the multimedia data creation control may be displayed in the navigation page in the form of "one-tap creation". The navigation page further includes other functional controls or display content, which are not limited herein and may be set according to a display requirement of the navigation page.

Upon detection of a trigger operation on the multimedia data creation control in the navigation page, the object selection page is displayed, where the trigger operation on the multimedia data creation control may include, but is not limited to, a tap operation, a pressing operation, or the like on the multimedia data creation control. For example, with reference to FIG. 2, FIG. 2 is a schematic diagram of display of an object selection page according to an embodiment of the present disclosure. A left diagram in FIG. 2 is the navigation page, and the object selection page shown in a right diagram in FIG. 2 is displayed when a user taps the multimedia data creation control in the navigation page, that is, a one-tap creation control. The object selection page in FIG. 2 includes a plurality of object display areas, and each object display area displays object attribute information of a candidate object, and the candidate objects displayed in different object display areas are different. Each object display area may include pictures and object attribute information of the candidate object, so that users may understand the candidate object by browsing the pictures and the object attribute information. It may be understood that in the case of detecting an up-and-down sliding operation in the object selection page, the candidate objects in the object selection page are displayed in a sliding manner, that is, other candidate objects that are not currently displayed in the object selection page are displayed.

S120: An information editing page is displayed in response to an object selection operation in the object selection page, where the information editing page includes an image to be displayed and a text item to be displayed for a selected target object.

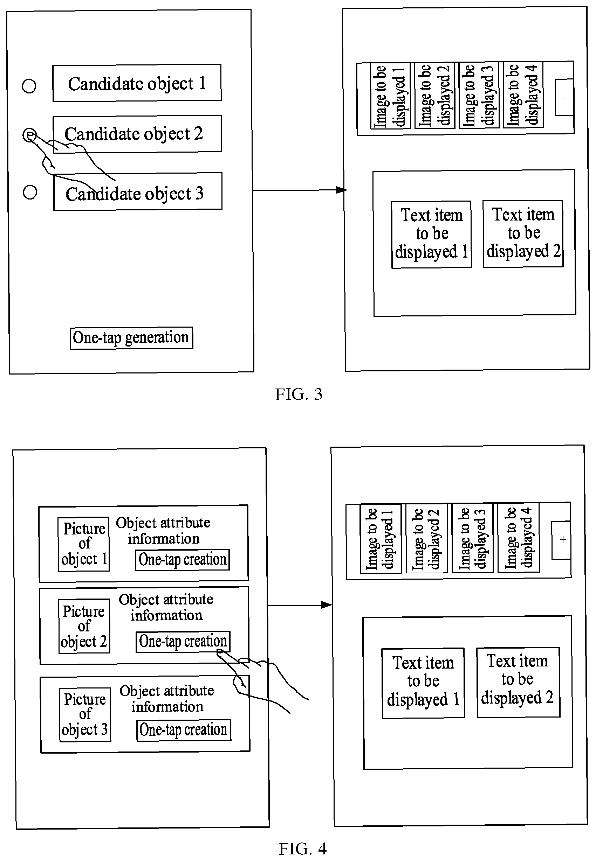

Optionally, a trigger operation on the object display area is used as the object selection operation, for example, the trigger operation on the object display area may be a tap operation, etc. Optionally, each object display area includes a selection control, such as a circular control in the right diagram in FIG. 2. When detecting that a selection control in any of the object display areas is triggered, a candidate object corresponding to the object display area is determined as the target object. A selected identifier is displayed on the selection control, for example, a hollow circle is converted into a solid circle, or an identifier such as "√" is displayed on the circular control. For example, with reference to FIG. 3, FIG. 3 is a schematic diagram of display of an information editing page according to an embodiment of the present disclosure.

It may be understood that there is one target object, and in the case where one candidate object is selected, the target object is updated when a selection operation for another candidate object is detected. As can be appreciated from FIG. 3, the object selection page includes trigger controls for the information editing page, which may be controls such as "Confirm", "Next", or "One-tap generation". In the case of a candidate object being selected in the object selection page, the information editing page is displayed when the trigger control for the information editing page is detected to be triggered. The trigger control for the information editing page may be at the bottom or top right corner of the object selection page, and the position of the control is not limited herein.

In some embodiments, the preset trigger operation may also be a trigger operation on object recommendation information or object recommendation controls, and accordingly, the object selection page is an object recommendation page. For example, the object recommendation information may be a notification bar or an application information notification bar displayed on a terminal desktop, the object selection page is displayed in the case of detecting a trigger operation on the object recommendation information in the notification bar, and recommended candidate objects are displayed in the object selection page. For example, the navigation page of an application includes an object recommendation control, and the object selection page is displayed in the case of detecting that the object recommendation control is triggered. It may be understood that candidate recommendation that is triggered by the object recommendation information or the object recommendation control and is displayed in the object selection page is an application recommendation object.

For example, with reference to FIG. 4, FIG. 4 is a schematic diagram of display of an information editing page according to an embodiment of the present disclosure. The object selection page includes at least one object display area, and candidate objects displayed in each object display area are different. Each object display area includes object attribute information of the candidate object and a multimedia data creation control, i.e., each candidate object corresponds to a multimedia data creation control. This may be a trigger operation on the object display area in the object display area, and is used as an object selection operation for the candidate object corresponding to the object display area. Accordingly, the information editing page of the target object is displayed in response to the trigger operation on the multimedia data creation control in any of the object display areas, where the target object is a candidate object corresponding to the object display area selected by the trigger operation, for example, the target object is an object 2 selected in the object display area in FIG. 4, and the information editing page is an information editing page of the object 2.

On the basis of the above-mentioned embodiment, the multimedia data creation control has a one-tap trigger function of multimedia data. To make a function prompt to the user, the multimedia data creation control is prompted in a page in which the multimedia data creation control is located, so that the user can understand and use the multimedia data creation control. The page in which the multimedia data creation control is located may include the navigation page in FIG. 2 or the object selection page in FIG. 4. Optionally, a color identifier is set on the multimedia data creation control in the above-mentioned page to distinguish other functional controls, for example, the multimedia data creation control is set to be blue, red, etc. Optionally, a new function identifier is set on the multimedia data creation control, for example, setting an exclamation mark icon on the multimedia data creation control, or adding a text identifier for "New function" on the multimedia data creation control. The new function identifier can trigger function description, for example, in the case of detecting a trigger operation on the new function identifier, function prompt information of the multimedia data creation control is displayed in the form of a pop-up, floating window, or bubble text items in the page in which the multimedia data creation control is located.

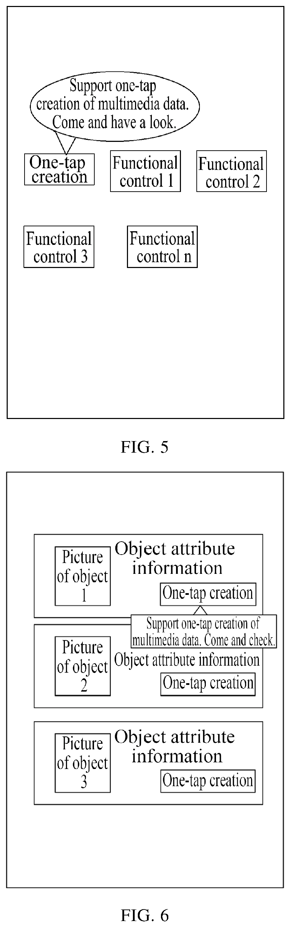

Optionally, guidance information of the multimedia data creation control is displayed in the page in which the multimedia data creation control is located, where the guidance information includes function prompt information of the multimedia data creation control, and a display position of the guidance information is adjacent to a display position of the multimedia data creation control. For example, with reference to FIG. 5 and FIG. 6, FIG. 5 is a schematic diagram of a navigation page according to an embodiment of the present disclosure, and FIG. 6 is a schematic diagram of an object selection page according to an embodiment of the present disclosure. Functions of the multimedia data creation control are prompted to the user by the guidance information set in the position adjacent to the multimedia data creation control, so that the user can understand and use the multimedia data creation control. For example, the guidance information may be displayed in the form of bubble text items at a position adjacent to the multimedia data creation control. The guidance information may be displayed in a blank space of the page, to avoid interference or obstruction to the rest of the page.

Optionally, the guidance information may be no longer displayed after being displayed for a preset duration, or in the case of detecting a closing operation on the guidance information, the display is canceled. For example, the closing operation on the guide information may be a swipe operation on the guide information, or a specific gesture in the page, etc., which is not limited herein.

It may be understood that the function prompt on the multimedia data creation control may be set according to the user's usage of the multimedia data creation control, for example, a first usage state is determined if the user uses the media data creation control less than a preset number of times, and a second usage state is determined if the user uses the media data creation control more than or equal to the preset number of times. The number of times the user uses the media data creation control may be the number of times the multimedia data is generated based on the media data creation control. In the first usage state, the multimedia data creation control is prompted, for example, displaying the guidance information or a new function icon, etc. In the second usage state, there is no need to prompt the multimedia data creation control, and the information on the navigation page or the object selection page is disturbed.

In the case of detecting that the user is using the media data creation control for a first time, operation prompt information is displayed on each page during generation and publication of the multimedia data, to prompt the user on the operation steps in each page. For example, the selection of the candidate object is prompted in the object selection page in FIG. 2.

On the basis of the above-mentioned embodiments, the object selection page includes a plurality of object tags, where the object tags are used to characterize object category information, the plurality of object tags are not identical, and each object tag corresponds to a different candidate object set. The object tag may be set above the at least one object display area, and the displayed candidate objects may be switched by switching the object tag.

Optionally, the object category information includes at least one of: an object source, an object type, and object resource information. For example, the object tag is an object source tag, i.e. a plurality of object source tags characterize different object sources, and the object source is a data source to which the candidate objects belong. For example, the object sources include, but are not limited to, "My showcase", "Recommended object", and so on, where there may be overlapping objects among the candidate objects in different data sources. For example, the object tag is an object type tag, i.e., different object types are characterized by a plurality of object type tags, where the object type includes, but is not limited to, clothing, ornaments, food, services, etc. For example, the object tag is an object resource tag, i.e., different object resource information is characterized by a plurality of object resource tags. The object resource information may be resource party information to which the candidate objects belong, and different resource parties may be a platform, a producer, a merchant, and an enterprise that provides the candidate objects.

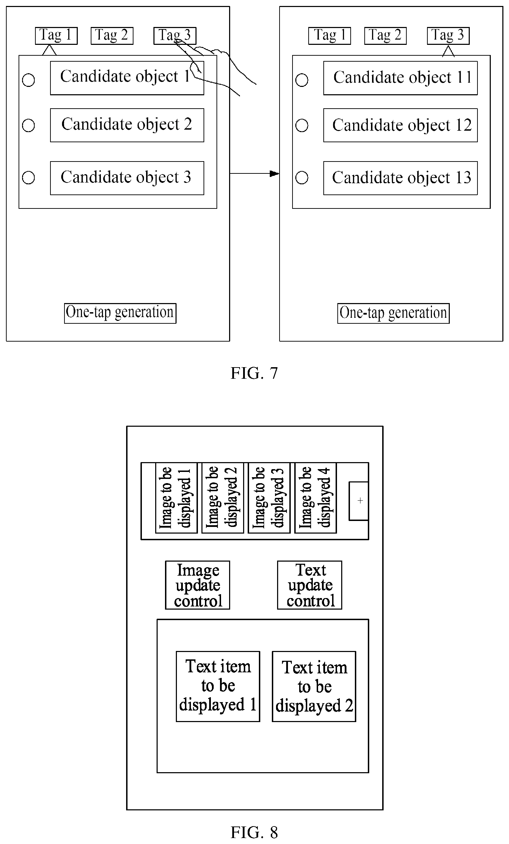

In the process of displaying the object selection page, in response to a switch operation on the object tag, object attribute information of a candidate object corresponding to a post-switch object tag is displayed in the object selection page. For example, with reference to FIG. 7, FIG. 7 is a schematic diagram of a candidate object switching in an object selection page according to an embodiment of the present disclosure. Optionally, the switch operation may be a tap operation on an undisplayed object tag. Taking FIG. 7 as an example, where the object tag displayed in FIG. 7 is a tag 1, candidate objects in a candidate object set corresponding to an object 1 are displayed in the object selection page, and upon detection of a tap operation on an undisplayed tag 3, the object selection page is switched to display candidate objects in a candidate object set corresponding to the tag 3. Optionally, the switch operation may also be a swipe operation, and for example, the switch operation is a left or right swipe operation. An object tag adjacent to the displayed object tags is determined as the post-switch object tag by the swipe operation. Taking the left swipe operation as an example, a right object tag of the displayed object tags is determined as the post-switch object tag, and object attribute information of a candidate object corresponding to the post-switch object tag is displayed in the object selection page.

It should be noted that a certain number of images of a target object are required in the process of generating the multimedia data of the target object. In the case of displaying the candidate object in the object selection page, the number of images of the candidate object is judged to determine whether a condition for generating the multimedia data is met, if the number of images of the candidate object is smaller than a minimum number of images for generating the multimedia data, it indicates that the candidate object does not meet the condition for generating the multimedia data. In the object selection page, the candidate object that does not meet the condition for generating the multimedia data is set to a non-selectable state. For example, in the object selection page shown in FIG. 2, the selection control is not displayed in the image display area where the candidate object does not meet the condition for generating the multimedia data, or the selection control is in a non-selectable state. For example, in the object selection page shown in FIG. 4, the media data creation control is not displayed in the image display area where the candidate object does not meet the condition for generating the multimedia data, or the media data creation control is in a non-triggerable state. By performing differential display on the candidate object that does not meet the condition for generating the multimedia data in the object selection page, the candidate object is in a non-selectable state, and an invalid operation process of the candidate object is avoided.

On the basis of selecting the target object, at least one image to be displayed for the target object is determined, at least one text item to be displayed for the target object is generated, and the at least one image to be displayed and the at least one text item to be displayed are displayed on the information editing page. The information editing page includes an image editing area and a text editing area, where the image editing area displays at least one image to be displayed for the target object; and the text editing area includes at least one text item to be displayed for the target object. The image to be displayed is an image for generating multimedia data and used for displaying the target object from an image perspective; and the text item to be displayed is text for generating multimedia data and used for displaying the target object from a textual or linguistic perspective.

The image to be displayed for the target object may be determined based on a plurality of initial images of the target object, the initial images of the target object may be images stored by the data source to which the target object belongs. Specifically, the plurality of initial images of the target object are obtained based on a data source address of the target object, and the at least one image to be displayed is determined based on the plurality of initial images. In some embodiments, the determination process of the image to be displayed may be: performing quality evaluation on the initial images to obtain quality evaluation data, and selecting, based on the quality evaluation data, an image to be displayed that meets a quality condition. The quality evaluation may be performed on the initial images by using an image quality evaluation model, for example, each initial image is separately input into the above-mentioned image quality evaluation model to obtain quality evaluation data of the initial image, the quality evaluation data is used to indicate the clarity and resolution of the initial image, and the higher the quality evaluation data the higher the image quality. The initial images may be sorted based on the quality evaluation data of the initial images, a preset number of images to be displayed may be selected based on the sorting, or images to be displayed with quality evaluation data greater than a quality threshold are selected. The quality of the multimedia data is further improved by performing quality evaluation and selecting on the initial images to ensure that the image to be displayed is a high-quality image.

In some embodiments, proportional cropping may be performed on the initial image to obtain the image to be displayed. The initial image may be randomly selected from the plurality of initial images of the target object, or may be an initial image that is selected based on the quality evaluation data. Because the initial images are not inconsistent in scale, the initial images are adjusted to a same scale by proportional cropping, to improve the consistency of the images to be displayed.

In some embodiments, the recommendation information of the target object may be added to the initial image to obtain the image to be displayed. The initial image may be randomly selected from the plurality of initial images of the target object, may be an initial image that is selected based on the quality evaluation data, or may be an initial image through proportional cropping as described above. By adding recommendation information to the initial image, combination of pictures and text items is implemented, and the performance in display of the target object is improved.

Text recognition may be performed on the initial image to determine whether the initial image already includes the recommendation information, and if not, the recommendation information may be added to the initial image. The recommendation information is preset recommendation information, which may be read from a specific storage position corresponding to the target object, there may be a plurality of pieces of preset recommendation information, and part of the preset recommendation information is added to each initial image. Alternatively, the recommendation information of the target object may be extracted from the description information of the target object, where the description information of the target object may include, but is not limited to, title information, introduction information, and detail information of the target object, and the recommendation information of the target object may be obtained by inputting the description information of the target object into a keyword extraction model.

On the basis of the above-described embodiments, a generation method for the text item to be displayed for the target object includes: obtaining attribute information and description information of the target object; and generating at least one text item to be displayed based on the attribute information and the description information of the target object, where the at least one text item to be displayed differs in text style and/or text content.

The attribute information of the target object is attribute data of the target object itself, including, for example, but not limited to, a usage scenario, a material, a style, a process, etc. The description information of the target object includes, but is not limited to, the title information, introduction information, and detail information of the target object.

In this embodiment, a text generation model may be invoked to input the attribute information and the description information of the target object into the text generation model, so as to automatically generate at least one text item to be displayed, and text content of the at least one text item to be displayed is different, thus reducing the difficulty of generating the text item to be displayed. The text generation model is pre-trained, has a text generation function, and the generated text item to be displayed meets a quality requirement, therefore, the text generation model can guarantee the text quality of the text item to be displayed.

In some embodiments, a text style library is pre-set, the text style library includes a plurality of text styles, each text style may be obtained based on published text learning of a certain learning object. A text style may be randomly selected in the text style library, and the text style and the attribute information and description information of the target object may be input into the text generation model to obtain a text item to be displayed that conforms to the text style.

The information editing page includes at least one text item to be displayed, and the text style of the at least one text item to be displayed may be different. Accordingly, the at least one text style may be obtained from the text style library, and a text item to be displayed is generated based on each text style and the attribute information and description information of the target object.

In some embodiments, a user's historical text style may be obtained, the user's historical text style is added to the text style library, a priority of the user's historical text style may be higher than priorities of other text styles. The user's historical text style may be obtained based on text learning in multimedia data historically published by the user. For example, the user's historically published multimedia data may be inquired based on a user identifier, text information in the historically published multimedia data is extracted, and style learning may be performed on the text information in the historically published multimedia data to obtain the user's historical text style.

In some embodiments, reference text or reference multimedia data that is input by the user may be received, the reference text may be extracted from the reference multimedia data. Style learning may be performed on the reference text to obtain a reference text style, and the reference text style is added to the text style library.

During the generation of the text item to be displayed, it is determined whether there is the user's historical text style and/or the reference text style in the text style library, if so, the user's historical text style and/or the reference text style, and some other text styles are selected to generate one or more of a text item to be displayed corresponding to the user's historical text style, a text item to be displayed corresponding to the reference text style, and a text item to be displayed corresponding to the other text styles.

S130: Multimedia data of the target object are generated in response to an edit operation on the image to be displayed and/or the text item to be displayed in the information editing page.

The at least one image to be displayed is sequentially displayed in the image editing area, where a sequence of the image to be displayed in the image editing area is a display sequence of the image to be displayed in the multimedia data. Optionally, the at least one image to be displayed includes a cover image, for example, a first display position of the image editing area is a display position of the cover image. Optionally, a cover identifier may be set for any of at least one image to be displayed, and the image to be displayed with the cover identifier set may be used as the cover image.

Adjustment of the image to be displayed in the image editing area may be implemented through an edit operation on the image to be displayed. Optionally, the edit operation on the image to be displayed may include a sequence adjustment operation on the image to be displayed in the image editing area. The display sequence of the multimedia data in the image editing area is adjusted by adjusting the sequence of the image to be displayed in the image editing area. The sequence adjustment operation may be a drag operation on the image to be displayed, for example, in the case of detecting a drag operation on any image to be displayed, the selected image to be displayed is moved with the drag operation, a display position where a release position of the drag operation is located is determined as a target display position of the selected image to be displayed, and display positions of other images to be displayed are adjusted sequentially. For example, when a first image to be displayed at a fourth display position is dragged to a second display position and released, the first image to be displayed is set at the second display position, a second image to be displayed, which is originally at the second display position, is adjusted to a third display position, and a third image to be displayed, which is originally at the third display position, is adjusted to a fourth display position.

It may be understood that, taking the first display position being the display position of the cover image as an example, in the case of any image to be displayed being dragged to the first display position, the dragged image to be displayed is set as the cover image.

Optionally, the edit operation on the image to be displayed may also include an upload operation to add an image in the image editing area. The image editing area includes an upload control, such as a "+" control in the image editing area of the information editing page shown in FIG. 4. In response to a trigger operation of the upload control, an image display page of the target object is displayed, which includes the plurality of initial images of the target object. In response to a selection operation of at least one initial image in the image display page, the selected initial image is added to the image editing area of the information editing page. Before adding the selected initial image to the image editing area, it may further include performing one or more of the following on the selected initial image: image enhancement, proportional cropping, and adding recommendation information. The image enhancement is performing an image enhancement processing on the initial image in the case where quality evaluation data of the selected initial image is less than a quality threshold, so as to improve the image quality of the image to be displayed.

It may be understood that the image editing area is set with an upper limit of the number of images, and when the number of images to be displayed in the image editing area reaches the upper limit of the number of images, prompt information is generated to prompt that image uploading could not continue.

Optionally, the edit operation on the image to be displayed may further include a delete operation on the at least one image to be displayed in the image editing area. The delete operation may be a swipe operation or a drag operation on the image to be displayed. For example, when the image to be displayed is dragged to any position outside the image editing area and released, the dragged image to be displayed is deleted. For example, when it is detected that any image to be displayed is dragged, a delete area is displayed in the information editing page, the delete area may be distinguished from other areas by color, and/or, a text identifier such as "Delete" is marked in the delete area, and when the dragged image to be displayed is released in the delete area, the dragged image to be displayed is deleted. Before dragging, one or more images to be displayed may be selected for deletion, and the selected one or more images to be displayed are deleted in batches.

The image editing area includes a limited number of display positions, which can display a limited number of images to be displayed, and if the number of images to be displayed for the target object is greater than the number of display positions, other images to be displayed for the target image are not displayed. Optionally, the edit operation on the image to be displayed may further include a sliding display operation on the image to be displayed in the image editing area, and the sliding display operation may be a left or right sliding operation in the image editing area to display an image to be displayed that is not displayed in the image editing area.

Optionally, the edit operation on the image to be displayed may further include an update operation on the image to be displayed in the image editing area. The update operation on the image to be displayed may be a first preset gesture operation, used for updating at least one image to be displayed in the image editing area, where the post-update at least one image to be displayed is different from at least part images of the pre-update at least one image to be displayed.

Optionally, the information editing page further includes an image update control, and for example, with reference to FIG. 8, FIG. 8 is a schematic diagram of an information editing page according to an embodiment of the present disclosure. Accordingly, the update operation on the image to be displayed may be a trigger operation on the image update control. Accordingly, the image to be displayed in the image editing area is updated in response to the trigger operation on the image update control.

The update process of the image to be displayed may be as follows: removing images already displayed in the image editing area in the plurality of initial images of the target object, and determining a new image to be displayed based on the remaining initial images. The process of determining the new image to be displayed may be as follows: selecting images to be displayed that meet a quality condition based on the quality evaluation data of the initial images; and/or, performing proportional cropping on the initial images to obtain the image to be displayed; and/or, adding recommendation information of the target object to the initial images to obtain the image to be displayed.

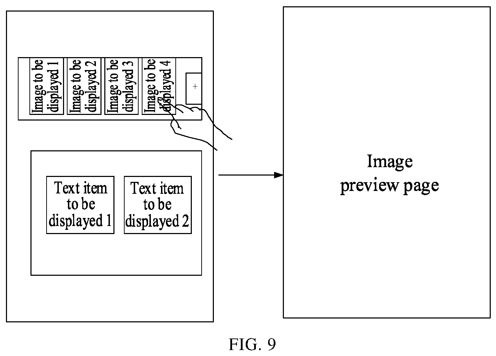

Before generating the multimedia data, the images to be displayed for the target object may be previewed to check a display effect of the images to be displayed. Accordingly, in response to a preview trigger operation on the images to be displayed in the information editing page, an image preview page is displayed, in which the images to be displayed for the target object are displayed sequentially. The preview trigger operation may be a tap operation on a preview control in the information editing page, or a tap operation on any image to be displayed in the image editing area. For example, with reference to FIG. 9, FIG. 9 is a schematic diagram of display of an image preview page according to an embodiment of the present disclosure.

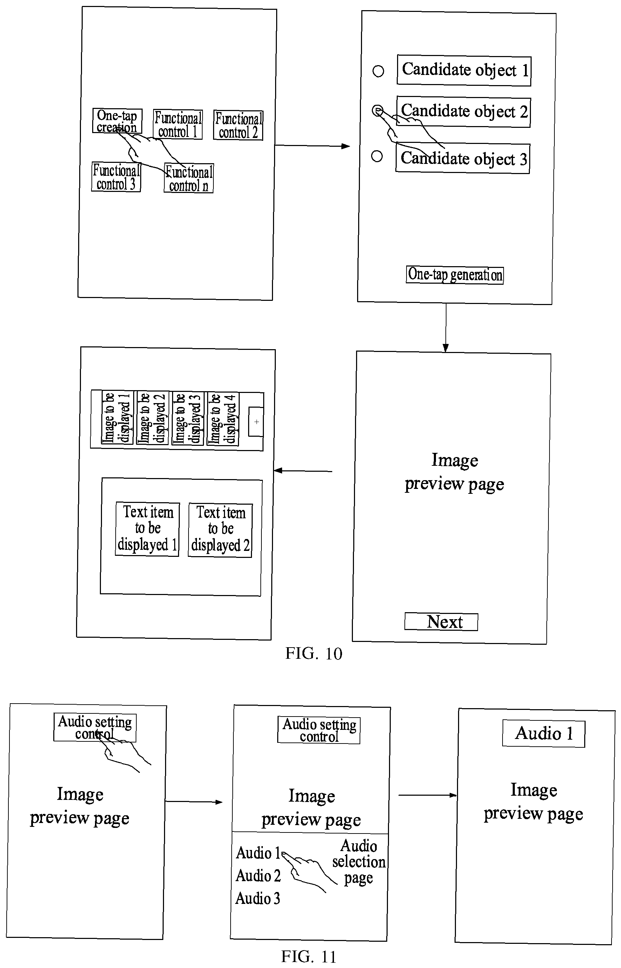

Optionally, a certain waiting duration is caused by a processing procedure of the text item to be displayed, before displaying the information editing page, the image preview page is displayed, in which the images to be displayed for the target object are sequentially displayed. In a waiting process of displaying the information editing page, a display effect of the images to be displayed is previewed, which takes a waiting problem and a display effect problem into account. For example, with reference to FIG. 10, FIG. 10 is a schematic diagram of a display process of an information editing page according to an embodiment of the present disclosure.

In the image preview page, the images to be displayed are displayed sequentially according to the display sequence of the images to be displayed for the target object, and a next image to be displayed is switched based on a preset time interval. The preset time interval may be 3s. The preset time interval may be updated in response to a setting operation, or may be adjusted according to the number of images to be displayed and a total playback duration.

When the images to be displayed are previewed, the information editing page is displayed; or, in response to a trigger operation on the image preview page, the image preview page is switched to the information editing page. The trigger operation on the image preview page may be a trigger operation on a return control or a "Next" control.

The preview of the images to be displayed is convenient to check the display effect of the images to be displayed in advance, providing a reference for users to edit the images to be displayed in the image editing area.

At least one text item to be displayed is displayed in the text editing area, where at least one text item to be displayed is sorted horizontally or vertically, and the text items to be displayed may be displayed by the sliding operation. As shown in FIG. 8, only two text item to be displayed are shown in FIG. 8, and the number of text item to be displayed may be determined based on a preset number of text, which is not limited herein.

In this embodiment, the text item to be displayed may be edited to obtain a text item to be displayed that meets user needs. Optionally, the edit operation on the text item to be displayed may include a selection operation on any text item to be displayed in the text editing area. Each text item to be displayed may be preceded or followed by a selection control, if a trigger operation is detected for the selection control corresponding to any text item to be displayed, the selected text item to be displayed corresponding to the selection control is determined as a target text.

Optionally, the edit operation on the text item to be displayed may further include a content edit operation on the text item to be displayed in the text editing area. The content edit operation on the text item to be displayed includes additions, deletions, and modifications to the text content. For example, when any text item to be displayed is selected, the selected text item to be displayed may be switched to an editable state, or when a trigger operation such as tapping or pressing on any text item to be displayed is detected, the selected text item to be displayed may be switched to an editable state.

Optionally, the edit operation on the text item to be displayed may further include an update operation on the text item to be displayed in the text editing area, and the update operation is used for updating all text items to be displayed in the text editing area. The text item to be displayed in the text editing area is updated in response to the update operation, and the post-update text item to be displayed differs from the pre-update text item to be displayed in text style and/or text content. The update operation on the text item to be displayed may be a second gesture operation in the information editing page.

Optionally, the information editing page further includes a text update control, as shown in FIG. 8. Accordingly, the update operation on the text item to be displayed may be a trigger operation on the text update control, and the text item to be displayed in the text editing area is updated in response to the trigger operation on the text update control. The post-update text item to be displayed differs from the pre-update text item to be displayed in text style and/or text content.

The update process of the text item to be displayed may be: selecting at least one text style in the text style library as a text style of the post-update text item to be displayed, and generating at least one new text item to be displayed based on the text style of the post-update text item to be displayed and the attribute information and description information of the target object. Optionally, the text style of the post-update text item to be displayed differs from a text style of any pre-update text item to be displayed. Optionally, when the text style library includes a user's historical text style or a reference text style, the user's historical text style or the reference text style may be used as the text style of the post-update text item to be displayed, and text content of a new text item to be displayed that is generated based on the user's historical text style or the reference text style is different from text content of the pre-update text item to be displayed.

In the content editing process of the text item to be displayed, it is detected whether a number of words of the text item to be displayed after the editing process exceeds a preset number of words, and if so, prompt information of the number of words is generated.

The information editing page includes a multimedia data generation control, and in response to a trigger operation on the multimedia data generation control, the multimedia data of the target object is generated based on the at least one image to be displayed in the image editing area and the selected text item to be displayed in the text editing area. The multimedia data is data used for displaying the target object. The multimedia data may be graphic data or video data, and may be stored locally to facilitate subsequent search and transmission of the multimedia data.

A generation process of the graphic data may be: adding the image to be displayed and the text item to be displayed to a graph-text template to obtain the graphic data of the target object. The graph-text template may include an image display area and a text display area, the image display area may include a display position, and at least one image to be displayed is displayed in the display position in a loop manner; alternatively, the image display area may include a plurality of display positions, and each display position respectively displays an image to be displayed. The text display area includes a title position and a content position, accordingly, the text item to be displayed includes a title and content, and the title and the content in the text item to be displayed are added to the title position and the content position, respectively.

A generation process of the video data may be: displaying the at least one image to be displayed at a preset time interval in a loop manner to form video frames, for example, setting each image to be displayed as a plurality of video frames, to meet a display duration of the image to be displayed. The text items to be displayed are sequentially added to the plurality of video frames to form the video data. The text item to be displayed may also be converted into audio data, and the audio data may be combined with the video data formed by the plurality of video frames to obtain the video data of the target object.

In some embodiments, the information editing page may further include a multimedia data publication control, accordingly, the generated multimedia data is published to the Internet, and accordingly, the multimedia data is multimedia data for publishing. In response to a trigger operation on the multimedia data publication control, the multimedia data is generated based on the at least one image to be displayed in the image editing area and the selected text item to be displayed in the text editing area, and the multimedia data is published. After successful publication of the multimedia data, the navigation page is displayed, and prompt information for successful publication is displayed on the navigation page. In the case of failed publication of the multimedia data, prompt information for failed publication is displayed, which may include a failure code for guaranteeing a reason for upload failure, for example, including, but not limited to, multimedia data uploaded reaching a maximum number, system errors, no network connection, etc. In the case of failed publication of the multimedia data, the multimedia data is stored to facilitate re-uploading of the multimedia data.

On the basis of the above-mentioned embodiments, audio data may also be added to the multimedia data, and the audio data may be music data, as background music in an image and text display process. Accordingly, before generating the multimedia data, it is also possible to set the audio data to be added to the multimedia data.

Optionally, the image preview page and/or the information editing page further includes an audio setting control, and accordingly, the audio data may be added during the display of the image preview page, or the audio data may be added during the display of the information editing page.

In some embodiments, the adding manner of the audio data may be as follows: adding audio data to be displayed for the target object in response to a first trigger operation on the audio setting control. The first trigger operation may be a tap operation on the audio setting control. When the first trigger operation on the audio setting control is detected, random audio data in an audio library is set as the audio data to be displayed for the target object, or preset audio data corresponding to the target object is invoked to be set as the audio data to be displayed for the target object, or default audio data is set as the audio data to be displayed for the target object.

In some embodiments, the adding manner of the audio data may be as follows: displaying an audio selection page on the image preview page in response to a second trigger operation on the audio setting control; and setting the audio data to be displayed for the target object in response to a selection operation on any audio data in the audio selection page. For example, with reference to FIG. 11, FIG. 11 is a schematic diagram of an audio setting process according to an embodiment of the present disclosure.

The second trigger operation may be a double-tap operation, a pressing operation, a swipe operation, etc. of the audio setting control, and the first trigger operation and the second trigger operation are different trigger operations and may be any operation set according to the user's requirements. The audio selection page includes candidate audio data in the audio library, for example, a middle diagram of FIG. 11 is an example only, and a size of the audio selection page may be set according to requirements or adjusted based on an amount of candidate audio data in the audio library. In response to a sliding operation in the audio selection page, the candidate audio data is displayed in a sliding manner, which is convenient for the user to select.

The selection operation on the audio data may be a tap operation on any audio data, and the selected audio data is determined as the audio data to be displayed for the target object. A title of the selected audio data may be displayed on the audio setting control, as shown in a right diagram of FIG. 11, so that the user may visually check the audio data to be displayed for the target object. If a number of characters of the title of the selected audio data exceeds a number of displayable characters of the audio setting control, the title of the selected audio data is displayed in a scrolled manner.

The audio selection page may include an upload control, and a local music library page is displayed in response to a trigger operation on the upload control in the audio selection page. When any audio data in the local music library page is selected, the selected local audio data is uploaded and set as the audio data to be displayed for the target object.

On the basis of the above-mentioned embodiments, the set audio data to be displayed may be deleted. For example, the added audio data to be displayed is deleted in response to a third trigger operation on the audio setting control. The third trigger operation may be, for example, a tap operation on a "×" identifier in the audio setting control, which is not limited herein.

When a trigger operation on the multimedia data generation control is detected, it is determined whether the audio data to be displayed for the target object has been set, and if so, the multimedia data is generated based on the image to be displayed, the text item to be displayed, and the audio data to be displayed for the target object. On the basis of the generation of the graphic data and the video data, the audio data to be displayed is added to the graphic data and the video data as background audio data to obtain the multimedia data.

In the technical solution provided in this embodiment, the selection of the target object is implemented by displaying at least one candidate object through the object selection page. When the target object is selected, the image to be displayed and the text item to be displayed for the target object are displayed in the information editing page, and editing processing of the image to be displayed and/or the text item to be displayed may be implemented in the information editing page, to obtain materials for generating the multimedia data and to automatically generate the multimedia data. There is no need to use other graphic editing tools and applications, which reduces tedious switching and data transmission between tools and applications, simplifies the generation process of the multimedia data, and reduces the generation difficulty of the multimedia data.

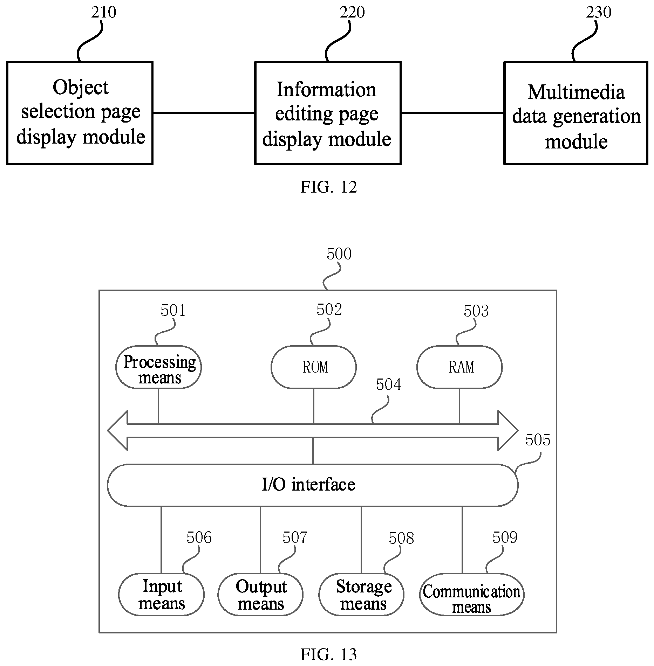

FIG. 12 is a schematic structural diagram of a multimedia data generation apparatus according to an embodiment of the present disclosure. As shown in FIG. 12, the apparatus includes: an object selection page display module 210, an information editing page display module 220, and a multimedia data generation module 230.

The object selection page display module 210 is configured to display an object selection page in response to a preset trigger operation.

The information editing page display module 220 is configured to display an information editing page in response to an object selection operation in the object selection page, where the information editing page includes an image to be displayed and a text item to be displayed for a selected target object.

The multimedia data generation module 230 is configured to generate multimedia data of the target object in response to an edit operation on the image to be displayed and/or the text item to be displayed in the information editing page.

In the technical solution provided in this embodiment of the present disclosure, the selection of the target object is implemented by displaying at least one candidate object through the object selection page. When the target object is selected, the image to be displayed and the text item to be displayed for the target object are displayed in the information editing page, and editing processing of the image to be displayed and/or the text item to be displayed may be implemented in the information editing page, to obtain materials for generating the multimedia data and to automatically generate the multimedia data. There is no need to use other graphic editing tools and applications, which reduces tedious switching and data transmission between tools and applications, simplifies the generation process of the multimedia data, and reduces the generation difficulty of the multimedia data.

On the basis of the above-mentioned embodiment, optionally, the object selection page display module 210 is configured to: display a navigation page, where the navigation page includes a multimedia data creation control; and display the object selection page in response to a trigger operation on the multimedia data creation control.

On the basis of the above-mentioned embodiment, optionally, the object selection page includes at least one object display area, and each object display area includes object attribute information of the candidate object and a multimedia data creation control.

The information editing page display module 220 is configured to: display the information editing page of the target object in response to a trigger operation on the multimedia data creation control in any of the object display areas, where the target object is a candidate object corresponding to an object display area selected by the trigger operation.

Optionally, the object selection page includes a plurality of object tags, where the object tags are used to characterize object category information, the plurality of object tags are not identical, and the object category information includes at least one of: an object source, an object type, and object resource information.

The object selection page display module 210 is further configured to: display, in response to a switch operation on the object tag, object attribute information of a candidate object corresponding to a post-switch object tag in the object selection page.

On the basis of the above-mentioned embodiment, optionally, guidance information of the multimedia data creation control is displayed in a page in which the multimedia data creation control is located, where the guidance information includes function prompt information of the multimedia data creation control, and a display position of the guidance information is adjacent to a display position of the multimedia data creation control.

On the basis of the above-mentioned embodiment, optionally, the information editing page includes an image editing area and a text editing area, where the image editing area displays at least one image to be displayed for the target object; the text editing area includes at least one text item to be displayed for the target object; and the multimedia data is graphic data or video data.

Optionally, the edit operation on the image to be displayed includes one or more of: a sequence adjustment operation on the image to be displayed in the image editing area; an upload operation to add an image in the image editing area; a delete operation on the at least one image to be displayed in the image editing area; an update operation on the image to be displayed in the image editing area; and a sliding display operation on the image to be displayed in the image editing area.

And, the edit operation on the text item to be displayed includes one or more of: an update operation on the text item to be displayed in the text editing area; a selection operation on any text item to be displayed in the text editing area; and a content edit operation on the text item to be displayed in the text editing area.

On the basis of the above-mentioned embodiment, optionally, the apparatus further includes:
an image to be displayed determination module configured to obtain a plurality of initial images of the target object, and obtain the image to be displayed based on the initial images.

The image to be displayed determination module is specifically configured to: perform quality evaluation on the initial images to obtain quality evaluation data, and select, based on the quality evaluation data, an image to be displayed that meets a quality condition; and/or, perform proportional cropping on the initial images to obtain the image to be displayed; and/or add recommendation information of the target object to the initial images to obtain the image to be displayed, where the recommendation information is preset recommendation information, or is extracted from description information of the target object.

On the basis of the above-mentioned embodiment, optionally, the apparatus further includes:
a text item to be displayed generation module configured to obtain attribute information and description information of the target object; and generate at least one text item to be displayed based on the attribute information and the description information of the target object, where the at least one text item to be displayed differs in text style and/or text content.

On the basis of the above-mentioned embodiment, optionally, the information editing page further includes an image update control and/or a text update control; and
the multimedia data generation module 230 is configured to: update the image to be displayed in the image editing area in response to a trigger operation on the image update control, where the post-update at least one image to be displayed differs from at least part of the pre-update at least one image to be displayed;
and/or update the text item to be displayed in the text editing area in response to a trigger operation on the text update control, where the post-update text item to be displayed differs from the pre-update text item to be displayed in text style and/or text content.

On the basis of the above-mentioned embodiment, optionally, the apparatus further includes:
an image preview module configured to, before displaying the information editing page, display an image preview page in which the image to be displayed for the target object is sequentially displayed; and/or display the image preview page in response to a trigger operation on the image to be displayed in the information editing page.

On the basis of the above-mentioned embodiment, optionally, the image preview page and/or the information editing page further includes an audio setting control; and
the apparatus further includes:
an audio setting module configured to add audio data to be displayed for the target object in response to a first trigger operation on the audio setting control; and/or display an audio selection page on the image preview page in response to a second trigger operation on the audio setting control; set the audio data to be displayed for the target object in response to a selection operation on any audio data in the audio selection page; and/or delete the added audio data to be displayed in response to a third trigger operation on the audio setting control.

The multimedia data generation apparatus provided in this embodiment of the present disclosure can perform the multimedia data generation method according to any of the embodiments of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

FIG. 13 is a schematic structural diagram of an electronic device according to an embodiment of the present disclosure. Reference is made to FIG. 13 below, which is a schematic structural diagram of an electronic device (such as a terminal device or a server in FIG. 13) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 13 is merely an example, and shall not impose any limitation on the function and scope of use of the embodiments of the present disclosure.

As shown in FIG. 13, the electronic device 500 may include a processing means (for example, a central processing unit or a graphics processing unit) 501 that may perform a variety of appropriate actions and processing in accordance with a program stored in a read-only memory (ROM) 502 or a program loaded from a storage means 508 into a random-access memory (RAM) 503. The RAM 503 further stores various programs and data required for the operation of the electronic device 500. The processing means 501, the ROM 502, and the RAM 503 are connected to one another through a bus 504. An input/output (I/O) interface 505 is also connected to the bus 504.

Generally, the following apparatuses may be connected to the I/O interface 505: an input means 506 including, for example, a touchscreen, a touchpad, a keyboard, a mouse, a camera, a microphone, an accelerometer, and a gyroscope; an output means 507 including, for example, a liquid crystal display (LCD), a speaker, and a vibrator; the storage means 508 including, for example, a magnetic tape and a hard disk drive; and a communication means 509. The communication means 509 may allow the electronic device 500 to perform wireless or wired communication with other devices to exchange data. Although FIG. 13 shows the electronic device 500 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 509, installed from the storage means 508, or installed from the ROM 502. When the computer program is executed by the processing means 501, the above-mentioned functions defined in the method of the embodiments of the present disclosure are performed.

The names of messages or information exchanged between a plurality of apparatuses in the implementations of the present disclosure are used for illustrative purposes only, and are not used to limit the scope of these messages or information.

The electronic device provided in this embodiment of the present disclosure and the multimedia data generation method provided in the above-mentioned embodiments belong to the same inventive concept. For the technical details not exhaustively described in this embodiment, reference may be made to the above-mentioned embodiments, and this embodiment and the above-mentioned embodiments have the same beneficial effects.

An embodiment of the present disclosure provides a computer storage medium having a computer program stored therein, where the program, when executed by a processor, implements the multimedia data generation method provided in the above-mentioned embodiments.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hyper Text Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to:

The computer-readable medium carries one or more programs that, when executed by the electronic device, cause the electronic device to: display an object selection page in response to a preset trigger operation; display an information editing page in response to an object selection operation in the object selection page, where the information editing page includes an image to be displayed and a text item to be displayed for a selected target object; and generate multimedia data of the target object in response to an edit operation on the image to be displayed and/or the text item to be displayed in the information editing page.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

## Claims

1. A multimedia data generation method, comprising:
displaying an object selection page in response to a preset trigger operation;
displaying an information editing page in response to an object selection operation in the object selection page, wherein the information editing page comprises an image to be displayed and a text item to be displayed for a selected target object; and
generating multimedia data of the target object in response to an edit operation on the image to be displayed and/or the text item to be displayed in the information editing page.

2. The method according to claim 1, wherein displaying the object selection page in response to the preset trigger operation comprises:
displaying a navigation page, wherein the navigation page comprises a multimedia data creation control; and
displaying the object selection page in response to a trigger operation on the multimedia data creation control.

3. The method according to claim 1, wherein the object selection page comprises at least one object display area, and each object display area comprises object attribute information of a candidate object and a multimedia data creation control; and
displaying the information editing page in response to the object selection operation in the object selection page comprises:
displaying the information editing page of the target object in response to a trigger operation on the multimedia data creation control in any of the object display areas, wherein the target object is a candidate object corresponding to an object display area selected by the trigger operation.

4. The method according to claim 2 or 3, wherein the object selection page comprises a plurality of object tags, wherein the object tags are used to represent object category information, the plurality of object tags are different, and the object category information comprises at least one of: an object source, an object type, and object resource information; and
the method further comprises:
displaying, in response to a switch operation on the object tag, object attribute information of a candidate object corresponding to a post-switch object tag in the object selection page.

5. The method according to claim 2 or 3, wherein guidance information of the multimedia data creation control is displayed in a page in which the multimedia data creation control is located, wherein the guidance information comprises function prompt information of the multimedia data creation control, and a display position of the guidance information is adjacent to a display position of the multimedia data creation control.

6. The method according to claim 1, wherein the information editing page comprises an image editing area and a text editing area, wherein the image editing area displays at least one image to be displayed for the target object; the text editing area comprises at least one text item to be displayed for the target object; the multimedia data is graphic data or video data;
the edit operation on the image to be displayed comprises one or more of:
a sequence adjustment operation on the image to be displayed in the image editing area;
an upload operation to add an image in the image editing area;
a delete operation on the at least one image to be displayed in the image editing area;
an update operation on the image to be displayed in the image editing area; and
a sliding display operation on the image to be displayed in the image editing area;
and, the edit operation on the text item to be displayed comprises one or more of:
an update operation on the text item to be displayed in the text editing area;
a selection operation on any text item to be displayed in the text editing area; and
a content edit operation on the text item to be displayed in the text editing area.

7. The method according to claims 1 or 6, wherein a determination method for the image to be displayed for the target object comprises:
obtaining a plurality of initial images of the target object, and obtaining the image to be displayed based on the initial images;
wherein obtaining the image to be displayed based on the initial images comprises:
performing quality evaluation on the initial images to obtain quality evaluation data, and selecting, based on the quality evaluation data, an image to be displayed that meets a quality condition; and/or
performing proportional cropping on the initial images to obtain the image to be displayed; and/or
adding recommendation information of the target object to the initial images to obtain the image to be displayed, wherein the recommendation information is preset recommendation information, or is extracted from description information of the target object.

8. The method according to claim 1 or 6, wherein a generation method for the text item to be displayed for the target object comprises:
obtaining attribute information and description information of the target object; and generating at least one text item to be displayed based on the attribute information and the description information of the target object, wherein the at least one text item to be displayed differs in text style and/or text content.

9. The method according to claim 6, wherein the information editing page further comprises an image update control and/or a text update control; and
the method further comprises:
updating the image to be displayed in the image editing area in response to a trigger operation on the image update control, wherein the post-update at least one image to be displayed differs from at least part of the pre-update at least one image to be displayed;
and/or
updating the text item to be displayed in the text editing area in response to a trigger operation on the text update control, wherein the post-update text item to be displayed differs from the pre-update text item to be displayed in text style and/or text content.

10. The method according to claim 1, further comprising:
before displaying the information editing page, displaying an image preview page in which the images to be displayed for the target object are sequentially displayed; and/or
displaying the image preview page in response to a trigger operation on the image to be displayed in the information editing page.

11. The method according to claim 10, wherein the image preview page and/or the information editing page further comprises an audio setting control; and
the method further comprises:
adding audio data to be displayed for the target object in response to a first trigger operation on the audio setting control; and/or
displaying an audio selection page on the image preview page in response to a second trigger operation on the audio setting control; and setting the audio data to be displayed for the target object in response to a selection operation on any audio data in the audio selection page; and/or
deleting the added audio data to be displayed in response to a third trigger operation on the audio setting control.

12. A multimedia data generation apparatus, comprising:
an object selection page display module configured to display an object selection page in response to a preset trigger operation;
an information editing page display module configured to display an information editing page in response to an object selection operation in the object selection page, wherein the information editing page comprises an image to be displayed and a text item to be displayed for a selected target object; and
a multimedia data generation module configured to generate multimedia data of the target object in response to an edit operation on the image to be displayed and/or the text item to be displayed in the information editing page.

13. An electronic device, comprising:
one or more processors; and
a storage means configured to store one or more programs, wherein
the one or more programs, when executed by the one or more processors, cause the one or more processors to implement the multimedia data generation method according to any of claims 1 to 11.

14. A storage medium comprising computer-executable instructions, wherein the computer-executable instructions, when executed by a computer processor, cause the computer processor to perform the multimedia data generation method according to any of claims 1 to 11.
